(19) Europäisches Patentamt

European Patent Office

Office européen des brevets

(11) **EP 1 597 717 B1**

(12) **EUROPEAN PATENT SPECIFICATION**

(45) Date of publication and mention
of the grant of the patent:
**10.06.2009 Bulletin 2009/24**

(51) Int Cl.:
***G09F 7/04*** *(2006.01)*   ***B32B 15/08*** *(2006.01)*

(21) Application number: **04712790.7**

(22) Date of filing: **19.02.2004**

(86) International application number:
**PCT/SE2004/000228**

(87) International publication number:
**WO 2004/075145 (02.09.2004 Gazette 2004/36)**

(54) **PASSIVELY MAGNETIC FOIL, NOTICE DEVICE AND USE OF THE NOTICE DEVICE**

PASSIV MAGNETISCHE FOLIE, NOTIZEINRICHTUNG UND VERWENDUNG DER NOTIZEINRICHTUNG

FEUILLE MAGNETIQUE PASSIVE, DISPOSITIF D'ANNONCE ET UTILISATION DU DISPOSITIF D'ANNONCE

(84) Designated Contracting States:
**AT BE BG CH CY CZ DE DK EE ES FI FR GB GR HU IE IT LI LU MC NL PT RO SE SI SK TR**

(30) Priority: **21.02.2003   SE 0300484**
**07.05.2003   US 468272 P**

(43) Date of publication of application:
**23.11.2005   Bulletin 2005/47**

(73) Proprietor: **Grindfill AB**
**136 50 Haninge (SE)**

(72) Inventors:
• **SVENSSON, Lars**
**S-113 22 Stockholm (SE)**
• **KARLSSON, Gert**
**S-120 47 Enskede Gård (SE)**
• **LUNDIN, Kent**
**S-141 42 Huddinge (SE)**
• **DRAKENSJÖ, Ingemar**
**S-182 46 Enebyberg (SE)**

(74) Representative: **Axelsson, Nils Ake A.L.**
**Groth & Co. KB,**
**Box 6107**
**102 32 Stockholm (SE)**

(56) References cited:
**WO-A1-99/18158       WO-A1-02/082409**
**DE-A1- 19 739 174    US-A- 3 965 599**
**US-A- 5 016 888      US-A- 5 503 891**
**US-B1- 6 387 485**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a passively magnetic foil including at least one layer. The invention also relates to a notice device for posting information, advertisements or the like on a supportive structure and use of the notice device.

### *Prior art*

Metal notice boards for posting messages with the aid of different types of magnets are generally known in the art. These notice boards are based on the concept of constructing the actual notice boards from a passively magnetic material, while using actively magnetic permanent magnets for posting messages on the board. The magnets exert their retaining force locally in respective contact surfaces with the substrate. The retaining force exerted by reasonably large magnets is less beneficial in respect of demanding environments and applications. The magnets are easily lost and in the absence of magnets messages that are printed on paper, for instance, cannot be posted on a metal notice board.

WO, A1, 99/18158 shows a passively magnetic polyester composition that can be used to produce sheet material by means of extrusion processes. The sheet products are usable in applications that require attraction in a magnetic field. The attraction is, however, much too weak to suit many conceivable applications.

DE, A1, 197 39 174 shows a magnetic foil. At least one surface/layer thereof exhibits actively magnetic properties. This foil, however, has the drawback of being excessively expensive in manufacture and use as a carrier of messages that shall be posted and changed often.

### *Summary of the invention*

A first object of the invention is to provide a foil, which is able to function as a carrier of information to be posted and, at the same time, to provide good attraction in a magnetic field, in other words the foil shall not be actively magnetic/permanently magnetic in itself. A second object of the invention is to provide a foil which can be produced and used inexpensively. A third object of the invention is to provide a foil that can be put in place and removed with the greatest speed and with the smallest risk to human health. A fourth object of the invention is to provide a foil that can be destroyed or recovered easily, without having a deleterious effect on the environment.

The invention thus relates to a passively magnetic foil including at least one layer. Said layer comprises at least one polymer material and at least one iron material, the iron material constituting 50-80 % by weight.

Said iron material may consist of pure iron and/or of one or more available iron compounds that have passively magnetic properties. Said polymer material may include one or more of the following materials: polypropylene, polyethylene, copolymer with polypropylene, copolymer with polyethylene, copolymer with polypropylene and polyethylene, and also other thermoplasts.

The aforesaid layer may include at least one additive material. Said additive may be titanium dioxide, $TiO_2$, chalk $CaCO_3$, talcum, ground glass or other available fillers. When polypropylene is used as the polymer material, said layer may have a density of 1.50-3.01 $g/cm^3$. Said layer may be coated with at least one coating material on at least one side, whereby said coating forms at least one further layer on said layer. Said coating material may be constituted by titanium dioxide mixed with at least one thermoplast and/or of at least one other filler mixed with at least one thermoplast so as to achieve opacity and/or whiteness. Said coating material may consist of a solvent-based polymeric binding agent that will impart a long storage time to the foil prior printing with printing ink or the like of the foil. The foil may have a total thickness of 0.1-2.5 mm.

The invention thus also relates to a notice device for posting information, advertisements or the like on a supportive structure, and comprising the passively magnetic foil according to the aforegoing. The notice device includes at least one actively magnetic substrate fastened to said structure and at least one piece of the passively magnetic foil applied to the substrate, whereby the information, advertisement(s) or the like is/are printed on the passively magnetic foil.

The invention also relates to the use of the notice device according to the aforegoing, wherein said actively magnetic substrate is fastened to an appropriate supporting structure, such as an indoor or outdoor wall, on a notice board that is free-standing or fastened to some other substrate, on part of a vehicle, such as a car, a bus, the carriage of a subway, the carriage of a train or the like and/or on a road sign.

### *List of drawings*

Figure 1 shows, in a cross-sectional view, a first embodiment of an inventive foil;

Figure 2 shows, in a cross-sectional view, a second embodiment of the inventive foil.

### *Description of embodiments*

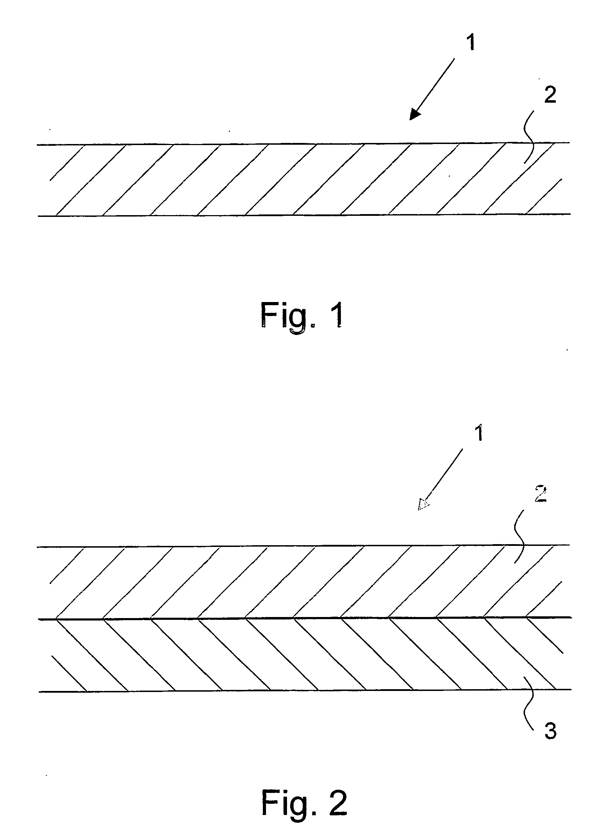

Figure 1 illustrates the structural make-up of a first embodiment of the foil 1 according to the invention. The foil 1 consists of only one layer 2 which comprises both a polymer material and an iron material. The iron material corresponds to 50-80 % by weight of the material in the layer 2 and most preferably about 70 % by weight. The layer 2 has a thickness of 0.03-0.20 mm. The iron material is present in the form of pure iron and/or one or more of the existing iron compounds having passively magnetic properties, such as iron oxide, hematite and magnetite. In turn, the polymer material is one or more of polypropylene, polyethylene, copolymer with polypropylene, copolymer with polyethylene, copolymer with polypropylene and polyethylene, and finally other thermoplasts. The polymer normally used is polypropylene. Thermoplasts can be chosen due to a desire for better wear properties, enhanced elasticity modules and/or bending modules, thermal tolerance or other features.

Additive material may be present in the layer 2, for instance, in the form of a dispersant and/or other additives, such as titanium dioxide $TiO_2$, chalk $CaCO_3$, talcum $Mg_3Si_4(OH)_2$, ground glass and/or other available fillers.

Figure 2 illustrates the structural make-up of a second embodiment of the foil 1 according to the invention. In addition to the aforesaid layer 2, a further layer 3 is present that has a coating material consisting of titanium dioxide $TiO_2$ mixed with a thermoplast. The further layer 3 with titanium dioxide has a thickness of 10-20 $\mu$m and may replace additive material in the form of titanium dioxide in the layer 2, either totally or partially. Instead of titanium dioxide mixed with a thermoplast, the further layer 3 may consist of polypropylene and/or polyethylene, that has been given a surface tension $\geq$ 40 dyne/cm by a so called corona treatment so as to make subsequent printing or lamination possible. Instead of one of said materials, the further layer 3 may consist of a solvent-based polymeric binder that will impart a long storage time to the foil prior to printing (with printing ink). Said solvent-based polymeric binder may also be applied to the further layer 3 in one of its aforesaid variants, therewith resulting in a foil that comprises three layers. Irrespective of the number of layers present in the foil, the foil shall have a thickness of 0.1-2.5 mm.

Iron, iron compounds, nickel and cobalt exhibit a high ferromagnetism of passive type. Magnetic flux density can be expressed as $\beta = 4\pi$ x I, where I is the magnetic moment per unit of volume, whereby I is 218 in the case of iron, 54.39 in the case of nickel and 161 in the case of cobalt. Iron is therefore the best. The concentration of iron material desired in the layer 2 will depend on the thickness of the layer 2 and on the distance to an actively magnetic surface. The actively magnetic material should be of an isotropic type. A smallest critical density per unit of surface area of the foil 1 is necessary in order to achieve a desired effect in the form of good magnetic attraction in a magnetic field. For reasons of a technical nature, concentrations of 50-80 % by weight of said iron material are used in the layer 2. The following relationship applies with respect to density,

$$\frac{I}{\rho_{tot}} = \frac{X_i}{\rho_{poly}} + \Sigma \frac{Y_i}{\rho_{oorg}}$$

where $\rho_{tot}$ is the total density of the material, $X_i$ is the polymer concentration, $\rho_{poly}$ is the polymer density. $Y_i$ is the concentration of inorganic components and $\rho_{oorg}$ is the density of in-organic components, said density being expressed as $g/cm^3$ and concentration being expressed by % by weight.

Example: In the case of 50 % by weight of $Fe_3O_4$ in the polypropylene, the density is 1.53 $g/cm^3$, and in the case of 80 % by weight $Fe_3O_4$, the density is 2.65 $g/cm^3$. In the case of 50 % by weight Fe(s) in the polypropylene, the density is 1.60 $g/cm^3$, and in the case of 80 % by weight Fe(s), the density is 3.01 $g/cm^3$. (In respect of iron, the density is 7.3-7.8 $g/cm^3$, whereas for magnetite and hematite, the density is 5.2 $g/cm^3$. Magnetite has the chemical formula $Fe_3O_4$ and hematite $Fe_2O_3$.)

The inventive foil provides good attraction in a magnetic field. It is produced and used cheaply. It may be applied to and removed from any appropriate substrate quickly, without the need of tools, glue or the like, and for this reason the effect on personal health is small. The foil may be destroyed or recovered readily and with no deleterious effect to the environment.

The foil is produced in the following way:

Polymer material and iron material of the earlier described kind are compounded to a granulate form. Additive(-s) is/are used in this process, in order to improve dispersion. There is preferably used an iron powder that has a particle size of 1-70 microns. The granulate shall contain 50-80 % by weight iron material. The granulate is then processed in an extruder and blown or flat-faced extruded as foil (film). Titanium dioxide may optionally be added in this step in the form of chalk, so as to obtain a smooth printable light surface for printing with printing ink.

The extrusion may be effected in one or more layers. When only a single layer 2 is produced in the extrusion process, solely the passively magnetic layer 2 will be obtained in the foil 1. When one or more additional layers 3 are present it/they may be present on one or both sides of the passively magnetic layer 2 in the foil 1, that is to say one or more additional layers 3 may be present on one side of the passively magnetic layer 2 and one or more additional layers 3 may be present on the other side of said passively magnetic layer 2, independently of each other. One or more additional layers 3 may consist of titanium dioxide mixed with at least one thermoplast and/or of at least one other filler mixed with at least one thermoplast, although other substances may also be considered. This enables different types of foil to be produced, e.g. foils that are white on both sides or white on one side and grey on the other side, and/or coated with material other than titanium dioxide on one and/or the other side. The foil is corona-treated for printability and may, as before mentioned, be coated with a solvent-based polymeric binder that functions to reduce surface tension. A neutral binder that has a broad area of use is used. This binder is, for instance, applied with the aid of a spiral applicator. Anti-static treatment may also be applied. The end product may be delivered in the form of a continuous web or may be cut to size in accordance with customer wishes.

Example 1: There is produced a compounded material of 80 % by weight pure iron Fe(s) and 20 % by weight of a copolymer of ethylene-vinyl acetate having an apparent density of 2.6 g/cm$^3$. The particles have a size of 45-75 microns. The compounded material is mixed with 15 % by weight of copolymer of polypropylene. A foil is extruded in a spiral mandrill type film blowing head, together with an outer layer on each side of the foil. Each of these outer layers comprises 92 % by weight polypropylene and 8 % by weight pure titanium dioxide such as to achieve whiteness. The foil is corona-treated to 42-44 dyne/cm and printed.

Example 2: Magnetite, Fe$_3$O$_4$, was compounded to obtain a finished material that has a density of 2.91 g/cm$^3$. Carriers are a polypropylene block copolymer and polyethylene. 94 % by weight of said compounded material is mixed with 6 % by weight of a polypropylene homopolymer. This compounded material is extruded to a thickness of 0.12 mm as an intermediate layer between two transparent non-modified layers. As a result of its magnetic attraction, the resultant foil is found to have good adhesion to an actively magnetic surface. The functional three-ply foil may be laminated with 0.10 mm thick white-coloured polypropylene and also then shows good attraction or adhesion properties.

The inventive notice device for posting information, advertisements or the like on a supportive structure includes the passively magnetic foil according to the aforegoing. An actively magnetic substrate in the form of a sheet of permanent magnetic material is fastened to the rearwardly lying supportive structure in an appropriate known manner. The appropriate known manner, comprises gluing and/or mounting with different types of fasteners, such as screws, nails, hooks or the like.

A piece of the passively magnetic foil is applied to the permanent magnetic sheet and there retained by magnetic action. The information, advertisements or the like is/are printed on the passively magnetic foil.

When using the inventive notice device in accordance with the aforegoing, the actively magnetic substrate is fastened to a suitable supportive structure, such as an internal wall or external wall of a building, on a board which is free-standing or fixed to another substrate, on part of a conveyance vehicle, such as an automobile, a bus, a subway carriage, a train carriage or the like and/or on a road sign. The inventive notice device can also be used in connection with different types of games and in connection with mounting of drawings, charts, maps, sea charts and the like.

The principle on which the present invention is based may also be applied to fasten abrasive cloth, emery paper, polishing cloth and/or polishing paper or the like to the working part of a machine tool. In that case the abrasive cloth or equivalent is constituted by a passively magnetic foil according to the invention while the working part of the machine tool shows actively magnetic properties making it possible for the abrasive cloth or equivalent to be fastened to the working part of the machine tool solely with the aid of magnetic action.

Said polymer material may be of any appropriate known kind whatsoever. Mixtures of two or more polymer materials may also be used. By the expression foil is also meant film of suitable thicknesses. Nickel and/or cobalt material may be used together with or instead of iron material in the passively magnetic foil according to the invention.

The invention is not restricted to the illustrated embodiments, but can be varied within the scope of the accompanying claims.

**Claims**

1. Passively magnetic foil (1) for indoor or outdoor use and comprising at least one layer (2) that comprises at least one polymer material and at least one iron material, **characterized in that** the iron material constitutes 50 - 80 % by weight and that said layer (2) is coated with at least one coating material on at least one side by means of extrusion in several layers, whereby said coating material forms at least one additional layer (3) directly on said layer (2), said layer (2) comprising at least one additive material in the form of a dispersant.

2. Passively magnetic foil (1) according to claim 1, in which said iron material is constituted by pure iron and/or one or more available iron compounds that have passive magnetic properties.

3. Passively magnetic foil (1) according to any one of the preceding claims, in which said polymer material comprises one or more of polypropylene, polyethylene, copolymer with polypropylene, copolymer with polyethylene, copolymer with polypropylene and polyethylene, and finally other thermoplasts.

4. Passively magnetic foil (1) according to claim 1, in which said additive material is constituted by titanium dioxide TiO$_2$, chalk CaCO$_3$, talcum, ground glass or other available fillers.

5. Passively magnetic foil (1) according to any one of the preceding claims, in which said layer (2) shows a density of 1.50-3.01 g/cm$^3$ when the polymer material is polypropylene.

6. Passively magnetic foil (1) according to any one of the preceding claims, in which said coating material is constituted by titanium dioxide mixed with at least one thermoplast and/or of at least one other filler mixed with at least one thermoplast in order to obtain opacity and/or whiteness.

7. Passively magnetic foil (1) according to any one of the preceding claims, in which said coating material is constituted by a solvent-based polymeric binding agent that imparts a long storage life to the foil (1) prior to printing with printing ink or the like on the foil (1).

8. Passively magnetic foil (1) according to any one of the preceding claims, in which the foil has a total thickness of 0.1-2.5 mm.

9. Notice device for posting information, advertisements or the like on a supportive structure and comprising the passively magnetic foil (1) according to any one of the preceding claims, **characterised by** at least one actively magnetic substrate fastened to said structure and at least one piece of the passively magnetic foil (1) applied to said substrate, whereby the passively magnetic foil (1) has the information, advertisements or the like printed thereon.

10. Use of the notice device according to claim 9, **characterised in that** said actively magnetic substrate is affixed to an appropriate supporting structure such as an inner wall or an outer wall of a building, to a notice board that is free-standing or attached to some other substrate, on a part of a conveyance vehicle, such as an automobile, a bus, a subway carriage, a train carriage or the tire and/or on a road sign.

**Patentansprüche**

1. Passiv magnetische Folie (1) zur Verwendung im Innen- oder Außenbereich, die wenigstens eine Schicht (2) aufweist, welche wenigstens ein Polymermaterial und wenigstens ein Eisenmaterial enthält, **dadurch gekennzeichnet, daß** das Eisenmaterial 50-80 Gewichts-% ausmacht und die Schicht (2) auf wenigstens einer Seite mittels Extrusion in mehreren Schichten mit wenigstens einem Beschichtungsmaterial beschichtet ist, wodurch das Beschichtungsmaterial wenigstens eine zusätzliche Schicht (3) direkt auf der Schicht (2) bildet, wobei die Schicht (2) wenigstens ein Zusatzmaterial in Form eines Dispergiermittels enthält.

2. Passiv magnetische Folie (1) nach Anspruch 1, wobei das Eisenmaterial aus reinem Eisen und/oder einer oder mehreren verfügbaren Eisenverbindungen, die passiv magnetische Eigenschaften haben, gebildet ist.

3. Passiv magnetische Folie (1) nach einem der vorangegangenen Ansprüche, wobei das Polymermaterial eines oder mehrere unter Polypropylen, Polyethylen, Copolymer mit Polypropylen, Copolymer mit Polyethylen, Copolymer mit Polypropylen und Polyethylen und schließlich weitere Thermoplasten aufweist.

4. Passiv magnetische Folie (1) nach Anspruch 1, wobei das Zusatzmaterial durch Titandioxid $TiO_2$, Kreide $CaCO_3$, Talkum, gemahlenes Glas oder andere verfügbare Füllstoffe gebildet ist.

5. Passiv magnetische Folie (1) nach einem der vorangegangenen Ansprüche, wobei die Schicht (2) eine Dichte von 1,50-3,01 $g/cm^3$ hat, wenn das Polymermaterial Polypropylen ist.

6. Passiv magnetische Folie (1) nach einem der vorangegangenen Ansprüche, wobei das Beschichtungsmaterial durch Titandioxid im Gemisch mit wenigstens einem Thermoplasten und/oder durch wenigstens einen weiteren Füllstoff im Gemisch mit wenigstens einem Thermoplasten gebildet ist, um eine gute Trübheit und/oder Weiße zu erhalten.

7. Passiv magnetische Folie (1) nach einem der vorangegangenen Ansprüche, wobei das Beschichtungsmaterial durch ein Polymer-Bindemittel auf Lösungsmittelbasis gebildet ist, welches der Folie (1) vor dem Bedrucken der Folie (1) mit Druckfarbe oder dergleichen eine lange Lagerbeständigkeit verleiht.

8. Passiv magnetische Folie (1) nach einem der vorangegangenen Ansprüche, wobei die Folie eine Gesamtdicke von 0,1-2,5 mm hat.

9. Notizvorrichtung zum Übermitteln bzw. Bekanntgeben von Informationen, Werbung oder dergleichen auf einer Trägerstruktur, welche die passiv magnetische Folie (1) nach einem der vorangegangenen Ansprüche beinhaltet, **dadurch gekennzeichnet, daß** wenigstens ein aktiv magnetisches Substrat an der Struktur befestigt ist und wenigstens ein Stück der passiv magnetischen Folie (1) auf das Substrat aufgebracht ist, wobei auf der passiv magnetischen Folie (1) die Informationen, die Werbung oder dergleichen aufgedruckt sind.

10. Verwendung der Notizvorrichtung nach Anspruch 9, **dadurch gekennzeichnet, daß** das aktiv magnetische Substrat an einer geeigneten Trägerstruktur, wie einer Innenwand oder einer Außenwand eines Gebäudes, an einer Anschlagtafel, die freistehend oder an einem anderen Substrat angebracht ist, an einem Teil eines Beförderungsfahrzeugs, wie einem Auto, einem Bus, einem U-Bahn-Wagen, einem Zugwaggon oder dergleichen, und/oder an einem Straßenschild angebracht ist.

## Revendications

1. Feuille magnétique passive (1) pour utilisation en intérieur et à l'extérieur et comprenant au moins une couche (2) qui comprend au moins un matériau polymère et au moins un matériau ferreux, **caractérisé en ce que** le matériau ferreux constitue de 50 à 80 % en poids et **en ce que** ladite couche (2) est revêtue d'au moins un matériau de revêtement sur au moins une face au moyen d'une extrusion en plusieurs couches, de sorte que ledit matériau de revêtement forme au moins une couche supplémentaire (3) directement sur ladite couche (2), ladite couche (2) comprenant au moins un adjuvant sous forme d'un dispersant.

2. Feuille magnétique passive (1) selon la revendication 1, dans laquelle ledit matériau ferreux est constitué par du fer pur et/ou un ou plusieurs composés ferreux disponibles qui présentent des caractéristiques magnétiques passives.

3. Feuille magnétique passive (1) selon l'une quelconque des revendications précédentes, dans laquelle ledit matériau polymère comprend un ou plusieurs parmi le polypropylène, le polyéthylène, un copolymère avec du polypropylène, un copolymère avec du polyéthylène, un copolymère avec polypropylène et polyéthylène, et enfin d'autres thermoplastiques.

4. Feuille magnétique passive (1) selon la revendication 1, dans laquelle ledit adjuvant est constitué par du dioxyde de titane $TiO_2$, du carbonate de calcium $CaCO_3$, du talc, du verre broyé et d'autres matériaux de remplissage disponibles.

5. Feuille magnétique passive (1) selon l'une quelconque des revendications précédentes, dans laquelle ladite couche (2) présente une densité de 1,50 à 3,01 g/cm$^3$ lorsque le matériau polymère est du polypropylène.

6. Feuille magnétique passive (1) selon l'une quelconque des revendications précédentes, dans lequel ledit matériau de revêtement est constitué de dioxyde de titane mélangé avec au moins un matériau thermoplastique et/ou est constitué d'au moins un autre matériau de remplissage en mélange avec au moins un matériau thermoplastique afin d'obtenir de l'opacité et/ou de la blancheur.

7. Feuille magnétique passive (1) selon l'une quelconque des revendications précédentes, dans laquelle ledit matériau de revêtement est constitué d'un liant polymérique à base de solvant qui assure une durée de stockage importante à la feuille (1) avant l'impression avec de l'encre d'imprimerie ou analogue de la feuille (1).

8. Feuille magnétique passive (1) selon l'une quelconque des revendications précédentes, dans laquelle ladite feuille présente une épaisseur totale égale à 0,1 à 2,5 mm.

9. Dispositif d'annonce pour l'affichage d'informations, de la publicité ou similaire sur une structure de support et comprenant la feuille magnétique passive (1) selon l'une quelconque des revendications précédentes, **caractérisé par** au moins un substrat magnétique actif fixé sur ladite structure et au moins une partie de la feuille magnétique passive (1) appliquée audit substrat, la feuille magnétique passive (1) comportant l'information, les publicités ou analogues imprimés sur la feuille.

10. Utilisation du dispositif d'annonce selon la revendication 9, **caractérisé en ce que** ledit substrat magnétique actif est fixé sur une structure de support appropriée telle qu'une paroi d'intérieure ou un mur extérieur d'un bâtiment, sur un panneau d'affichage en pose libre ou fixé sur un autre substrat, sur une partie d'un véhicule de transport, tel qu'un véhicule automobile, un autobus, une rame de métro, un wagon de train ou analogue et/ou sur un panneau d'affichage routier.

Fig. 1

Fig. 2

**EP 1 597 717 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9918158 A1

- DE 19739174 A1